# FASCICULE DE BREVET EUROPEEN

(11) **EP 0 724 837 B1**
(45) Date de publication et mention de la délivrance du brevet: **13.12.2000**
(21) Numéro de dépôt: 96440014.7
(22) Date de dépôt: 02.02.1996
(51) Int. Cl.: A23G 3/30, A23G 3/20

(54) **Groupe de co-extrusion à sortie composite unique pour la production d'un boudin à noyau de pâte à mâcher et à enveloppe de sucre cuit**
Coextrusiongerät mit Kompositausgang zur Herstellung von Kaugummistrang mit Kern aus Gummi und Schale aus Zucker
Coextrusion device with composit output for making chewing gum with center of gum and shell of sugar

(30) Priorité: 03.02.1995 FR 9501417
(43) Date de publication de la demande: 07.08.1996
(73) Titulaire: ROBERT BOSCH GMBH, 70049 Stuttgart (DE)
(72) Inventeur: Towae, Gérard, F-67000 Strasbourg (FR)

(56) Documents cités:
- DE-A- 1 904 140
- FR-A- 2 228 436
- FR-A- 2 497 728
- GB-A- 359 458
- GB-A- 2 101 924
- US-A- 1 649 308
- US-A- 4 352 823
- US-A- 4 372 734
- US-A- 4 855 146
- US-A- 5 125 819
- US-A- 5 378 483

## Description

La présente invention se rapporte à un groupe de co-extrusion à sortie composite unique pour la production d'un boudin à noyau de pâte à mâcher et à enveloppe de sucre cuit.

Les bonbons fourrés du type, par exemple, dragées à coeur de gomme à mâcher enveloppé d'une gaine de sucre cuit cristallisé représentent une part importante du marché de la confiserie industrielle.

Cependant, ces bonbons sont produits, aujourd'hui encore, de façon au mieux semi-continue et les efforts entrepris pour automatiser la production afin d'accroître le rendement et diminuer le prix de revient n'ont pas débouché sur des réalisations satisfaisantes.

En effet, parmi les techniques connues actuellement pour produire des bonbons à coeur de pâte à mâcher ou analogue, la plus répandue consiste à former des blocs individuels de sucre cuit à noyau de pâte à mâcher, par exemple par repliement d'une nappe de sucre chaud liquide sur un noyau de gomme à mâcher. A leur sortie de l'unité de préparation-cuisson, les blocs individuels sont conformés un à un selon un profil général en boudin ou en nappe par compression entre les rouleaux coniques d'une rouleuse-fileuse. Les boudins ou les nappes sont ensuite acheminés par bande convoyeuse vers une unité de formage en vue de leur individualisation puis de leur conformation de finition, fonction de la forme finale recherchée : dragées, pastilles, tablettes etc. Les bonbons sont enfin dragéifiés, puis emballés individuellement ou par lots et ensachés.

Le principal inconvénient de cette technique réside dans l'aspect discontinu de la production puis du chargement des blocs individuels dans la rouleuse-fileuse qui ralentit considérablement la cadence de production des friandises.

En outre, une étape supplémentaire de refroidissement des blocs individuels, préalablement à leur introduction dans la rouleuse-fileuse, est également rendue nécessaire afin de tempérer les masses de sucre cuit et de pâte à mâcher associées à une température où elles sont extrudables. A cette fin, les blocs individuels peuvent être stockés temporairement sur une table réfrigérante. Une autre solution proposée en vue d'améliorer les cadences de production consiste à acheminer les blocs individuels depuis l'unité de préparation-cuisson vers la rouleuse-fileuse au moyen d'une bande convoyeuse circulant sur un banc en acier inoxydable réfrigéré complété par un dispositif d'arrosage de refroidissement. La mise en oeuvre d'un tel dispositif demeure néanmoins complexe et sa fiabilité limitée.

Enfin, les dispositifs connus ne permettent pas d'obtenir une production de qualité uniforme et constante. Les bonbons fourrés produits à l'aide de ces dispositifs présentent en effet souvent des variations de forme ou de dimensions, ainsi que des irrégularités dans la distribution des masses de pâte à mâcher et de sucre cuit dans le volume du bonbon. Ces défauts, préjudiciables à la qualité du produit fini et entraînant souvent le rejet d'une fraction non-négligeable de la production, augmentent d'autant les coûts de production.

La présente invention a pour but de résoudre ces difficultés en proposant un groupe de co-extrusion à sortie composite unique pour la production d'un boudin à noyau de pâte à mâcher et à enveloppe de sucre cuit.

Selon l'invention, deux voies d'alimentation séparées pour le sucre cuit liquide et la pâte à mâcher convergent en V vers les ouvertures d'admission d'une tête de compression qu'elles alimentent en continu et qui délivre en sortie un boudin composite extrudé continu à noyau de pâte à mâcher enveloppé d'une gaine de sucre cuit. Le boudin est ensuite acheminé par bande convoyeuse vers les unités d'individualisation et de conformation, les produits finaux du type dragées, tablettes, pastilles etc. étant enfin dragéifiés puis conditionnés pour leur distribution commerciale.

Selon un avantage essentiel de la présente invention, le groupe de co-extrusion permet de produire des bonbons fourrés de pâte à mâcher de façon entièrement continue et de réaliser ainsi d'importants gains de productivité, en supprimant le caractère discontinu de la production et du traitement des blocs individuels par les dispositifs connus, très préjudiciable dans le domaine de la production industrielle.

Le dispositif selon l'invention permet également d'éliminer l'étape intermédiaire de refroidissement des blocs individuels à une valeur où ils sont extrudables. En effet, il s'applique à des flux séparés de sucre cuit et de pâte à mâcher dont les températures d'extrusion sont plus faciles à maintenir à une valeur de consigne stricte que la température d'un bloc composite volumineux de sucre chaud et de pâte à mâcher dont les températures de surface et à coeur suivent des lois de variation très différentes.

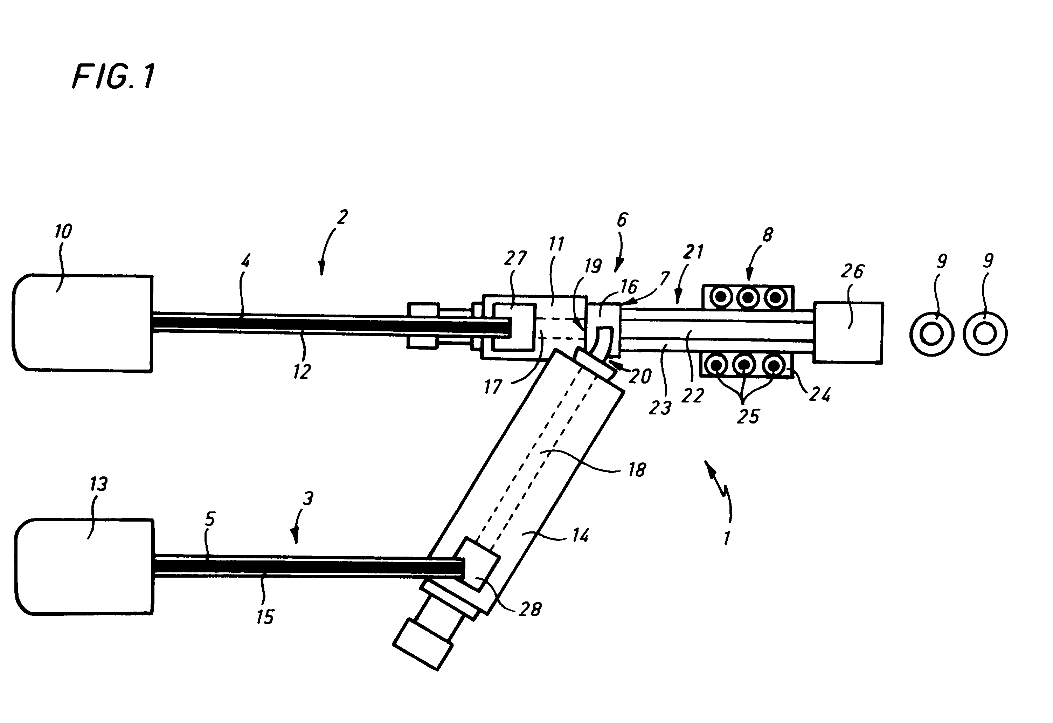

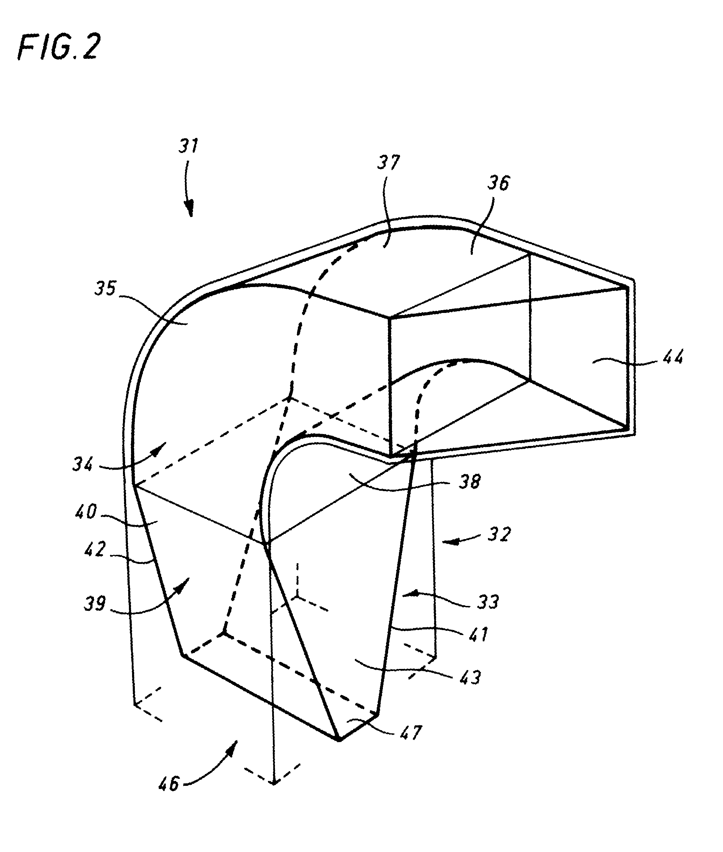

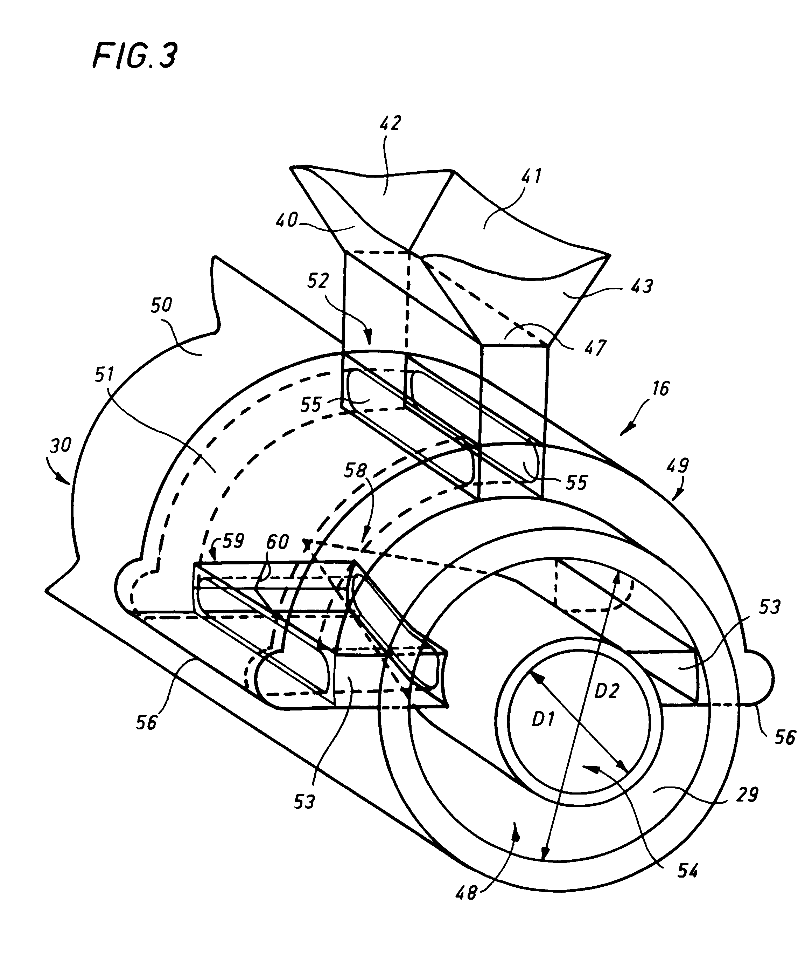

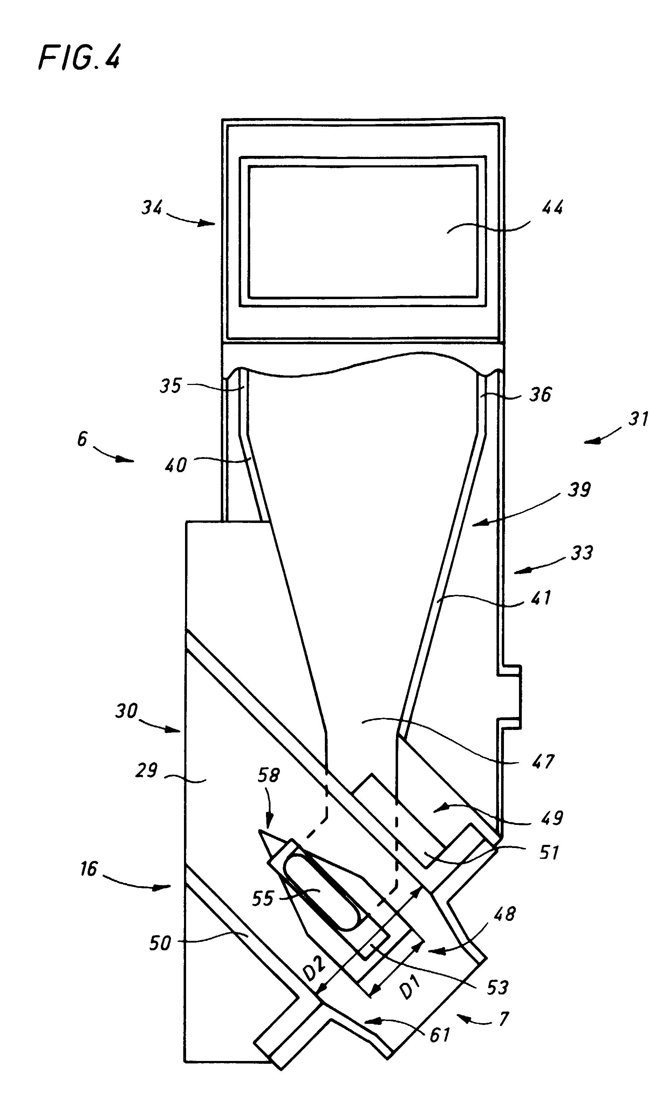

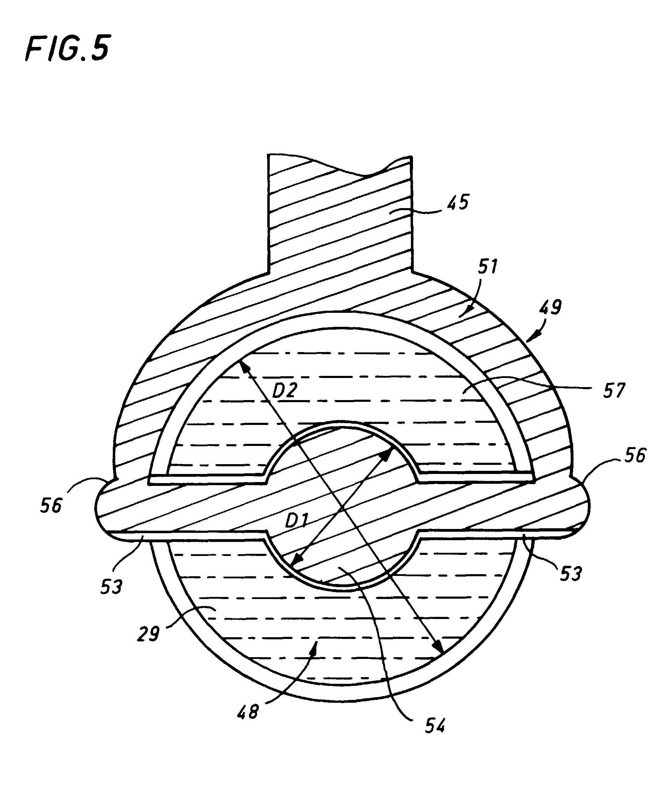

D'autres caractéristiques et avantages de la présente invention ressortiront mieux de la description qui va suivre d'une forme particulière et non-limitative de réalisation du dispositif selon l'invention, en référence au dessin accompagnant dans lequel :
. la figure 1 est une vue schématique de dessus d'une ligne de production complète de bonbons fourrés de pâte à mâcher comprenant le groupe de co-extrusion à sortie composite unique selon l'invention ;
. la figure 2 est une vue en perspective partielle du bloc de transfert de la pâte à mâcher réalisant le raccordement de la voie d'alimentation en pâte à mâcher avec la tête de compression du groupe de co-extrusion ;
. la figure 3 est une vue simplifiée transparente en perspective de la tête de compression-extrusion du groupe de co-extrusion selon l'invention ;
. la figure 4 est une vue en coupe verticale médiane du bloc de transfert de la pâte à mâcher et de la tête de compression du groupe de co-extrusion avec retournement vers le haut à 90° de la fenêtre d'admission du bloc de transfert et de la tête de filière d'extrusion du groupe de co-extrusion ;
. la figure 5 est une vue en coupe selon la ligne 5-5 de la tête de compression-extrusion représentée sur la figure 4.

L'invention procède de l'idée générale inventive consistant à faire converger en V deux voies d'alimentation séparées en sucre cuit et en pâte à mâcher vers une tête de compression unique qui assure la compression et la répartition des boudins de pâte à mâcher et de sucre cuit provenant des voies d'alimentation de manière à obtenir ensuite, au niveau de la tête de filière d'extrusion, un boudin à coeur cylindrique de pâte à mâcher et à enveloppe périphérique de sucre cuit résultant de la fusion au niveau de la tête de filière d'extrusion des deux boudins de pâte à mâcher et de sucre cuit.

L'unité de production complète représentée sur la figure 1 et désignée dans son ensemble par la référence générale 1 comprend essentiellement deux voies d'alimentation amont 2 et 3 pour le sucre cuit 4 et la pâte à mâcher 5 qui convergent en V vers un groupe de co-extrusion 6 objet de la présente invention dont une sortie composite 7 unique alimente en continu un dispositif aval 8 de conformation et de finition des produits tels que 9.

La voie d'alimentation amont 2 pour le sucre cuit 4 comprend classiquement une unité de préparation-cuisson 10 dans laquelle est préparé le produit périphérique.

Le sucre cuit 4 qui se présente alors à l'état de pâte au coefficient de viscosité élevé, est acheminé vers un premier extrudeur 11 sous la forme d'un boudin ou d'une nappe au moyen d'une bande convoyeuse 12.

De même, la voie d'alimentation amont 3 pour la pâte à mâcher 5 comprend une unité de préparation-cuisson 13 dans laquelle est préparé le produit de fourrage. La pâte à mâcher 5 est ensuite acheminée vers un deuxième extrudeur 14, surélevé par rapport à l'extrudeur 11, sous la forme d'un boudin ou d'une nappe au moyen d'une bande convoyeuse 15.

Le groupe de co-extrusion 6, dont la conformation sera décrite plus en détail ultérieurement, comporte une tête de compression 16 dont l'alimentation simultanée et continue en sucre cuit 4 d'une part, et en pâte à mâcher 5 d'autre part, est assurée par les extrudeurs 11 et 14 dont les conduits 17 et 18 respectifs à enveloppe creuse contenant un fluide caloporteur sont raccordés à la tête de compression 16 au niveau des sorties 19 et 20 des extrudeurs 11 et 14.

Selon un avantage essentiel de l'invention, la tête de compression 16 du groupe de co-extrusion 6 assure la compression et la répartition homogène des boudins ou nappes de sucre cuit 4 et de pâte à mâcher 5 de façon à obtenir, au niveau de la sortie composite 7 du groupe de co-extrusion 6, un boudin composite 21 par liaison-solidarisation d'un noyau cylindrique 22 de pâte à mâcher 5 avec une gaine périphérique 23 cylindrique de sucre cuit 4.

Le dispositif aval 8 de conformation et de finition des produits 9 disposé dans le prolongement du groupe de co-extrusion 6 comprend classiquement une première unité 24 d'étirage et de calibration du boudin composite 21 par passage entre des galets réglables de calibration tels que 25. La conformation ultérieure du boudin composite 21 en dragées, pastilles, tablettes, coussinets ou autres est assurée en continu par une seconde unité 26 de conformation, par exemple au moyen d'un dispositif à demi-coquilles articulées. Les produits 9 ainsi obtenus sont ensuite dragéifiés par le procédé connu sous le nom de galetage, puis emballés individuellement ou par lots et finalement ensachés, prêts à être commercialisés.

Afin d'éviter tout risque de recristallisation accidentelle et donc de blocage de l'alimentation en sucre cuit 4, l'extrudeur 11 dans lequel est admis le sucre cuit 4 est un extrudeur du type dit "à entrée courte" comportant sur sa surface supérieure une trémie d'alimentation 27 disposée à proximité de sa sortie 19, de façon à réduire la distance séparant les points d'entrée et de sortie de l'extrudeur 11 et donc les pertes thermiques survenant lors de l'avance du sucre cuit 4 dans l'extrudeur 11.

Au contraire, la pâte à mâcher 5 doit être refroidie à sa sortie de l'unité de préparation-cuisson 13 afin de présenter des propriétés de ductilité et de déformabilité adaptées à sa conformation ultérieure par extrusion. La pâte à mâcher 5 est donc introduite dans un extrudeur 14 dit "à entrée longue", car comportant sur sa surface supérieure une trémie d'alimentation 28 éloignée de sa sortie 20. De cette façon, le temps de parcours de la pâte à mâcher 5 est augmenté, ce qui favorise son refroidissement au contact de l'enveloppe du conduit 18 de l'extrudeur 14 refroidie par le passage d'un fluide caloporteur.

L'avance et la compression du sucre cuit 4 et de la pâte à mâcher 5 dans les conduits 17 et 18 des extrudeurs 11 et 14 sont assurées par des ensembles à vis co-rotatives non représentées sur les figures.

Comme il ressort de la figure 1, les voies d'alimentation 2 et 3 pour le sucre cuit 4 et la pâte à mâcher 5 convergent en V vers le groupe de co-extrusion 6 à deux niveaux différents, la voie d'alimentation 3 pour la pâte à mâcher 5 étant disposée à un niveau plus élevé que la voie d'alimentation 2 pour le sucre cuit 4.

Cette disposition essentielle de l'invention permet de disposer l'extrudeur 11 de sucre cuit 4 dans le prolongement horizontal d'un canal intérieur 29 cylindrique de la tête de compression 16 au niveau d'une entrée 30 de celle-ci, évitant ainsi tout risque de recristallisation accidentelle du sucre cuit 4. En effet, le montage direct de la sortie 19 de l'extrudeur 11 sur l'entrée 30 de la tête de compression 16 permet d'éviter le refroidissement du sucre cuit 4 lors de son passage de l'un à l'autre ainsi que son avance permanente et régulière, sans risque d'accumulation de sucre cuit 4 au droit d'une aspérité.

Le second extrudeur 14 pour la pâte à mâcher 5, disposé en élévation par rapport à l'extrudeur 11 pour le sucre cuit 4, est raccordé à la tête de compression 16 au moyen d'un bloc de transfert 31 représenté sur la figure 2 et constitué d'une chemise 32 dans le volume intérieur de laquelle s'étend un canal 33 pour l'acheminement de la pâte à mâcher 5.

La forme intérieure du canal 33 est optimisée pour permettre l'écoulement permanent et régulier de la pâte à mâcher 5. Celui-ci, en effet, est constitué d'une part d'un tronçon supérieur coudé 34 comprenant deux faces latérales verticales et planes 35 et 36 et deux faces inférieure et supérieure 37 et 38 courbées, et d'autre part d'un tronçon inférieur 39 vertical, prolongeant le tronçon supérieur coudé 34 vers le bas et comprenant deux faces latérales 40 et 41 convergeant l'une vers l'autre dans le sens descendant et deux faces arrière 42 et avant 43 s'éloignant progressivement l'une de l'autre.

L'extrémité libre supérieure du tronçon coudé 34 forme une fenêtre d'admission 44 de profil par exemple rectangulaire, par laquelle le canal intérieur 33 du bloc de transfert 31 est raccordé à la sortie 20 de l'extrudeur 14 de pâte à mâcher 5.

Par son profil rhéologique intérieur complexe tenant compte de la rhéologie propre au produit, d'abord constant puis convergeant selon deux faces 40 et 41 opposées et divergeant selon ses deux autres faces 42 et 43, le canal intérieur 33 du bloc de transfert 31 assure la conformation progressive en une nappe 45 régulière et homogène du boudin de pâte à mâcher 5 délivré en sortie 20 de l'extrudeur 14.

La conformation générale de la chemise 32 du bloc de transfert 31 ne se différencie de celle du canal intérieur 33 qu'en ce que son tronçon inférieur 45 vertical est constitué d'un simple élément de forme générale parallélépipèdique.

Comme il ressort en particulier de la figure 3, l'extrémité libre inférieure du canal intérieur 33 du bloc de transfert 31 forme une fenêtre d'éjection 47 de profil général rectangulaire raccordant le bloc de transfert 31 à une tête de filière d'extrusion 48 réalisant la répartition des masses de sucre cuit 4 et de pâte à mâcher 5 de façon à obtenir, au niveau de la sortie composite 7 du groupe de co-extrusion 6 objet de l'invention, le boudin composite 21 primaire à noyau cylindrique 22 de pâte à mâcher 5 enveloppé d'une gaine périphérique 23 de sucre cuit 4 recherché.

La tête de filière d'extrusion 48 comprend un distributeur 49 rapporté sur la surface supérieure d'une enveloppe cylindrique 50 du canal intérieur 29 de la tête de compression 16. Le distributeur 49 qui affecte la forme générale d'un demi-cylindre adapté pour pouvoir être engagé sur l'enveloppe cylindrique 50 du canal intérieur 29 comprend, dans son épaisseur, une chambre 51 s'étendant de part et d'autre d'une ouverture supérieure 52 d'alimentation du distributeur 49 en correspondance avec la fenêtre d'éjection 47 du canal intérieur 33 du bloc de transfert 31. Cette chambre semi-annulaire 51 se prolonge par des cavités latérales de raccordement telles que 53, préférentiellement mais non limitativement horizontales, de la tête de filière d'extrusion 48 et débouche finalement dans un conduit central 54 cylindrique dont le diamètre intérieur D₁ détermine le diamètre du noyau cylindrique 22 de pâte à mâcher 5 du boudin composite 21.

Avantageusement, le canal intérieur 33 du bloc de transfert 31 se raccorde au niveau de sa fenêtre d'éjection 47 à l'ouverture supérieure 52 du distributeur 49 selon un profil lisse et sans aspérité, de façon à ne créer aucune perturbation lors du passage de la nappe 45 de pâte à mâcher 5. De même, le profil de section de la chambre 51 du type, par exemple, trou oblong 55, est destiné à favoriser l'avance permanente et régulière de la nappe 45 de pâte à mâcher 5 grâce à ses extrémités arrondies.

Pour les mêmes raisons, le distributeur 49 se raccorde aux cavités latérales 53 de la tête de filière d'extrusion 48 selon des rebords arrondis tels que 56 destinés à éviter l'accumulation de pâte à mâcher 5 dans cette zone.

On notera enfin (voir figure 5), que l'épaisseur verticale du distributeur 49 et donc de la chambre semi-annulaire 51 diminue continûment depuis son ouverture supérieure 52 de chargement vers les rebords arrondis 56 de raccordement aux cavités latérales 53 de la tête de filière d'extrusion 48, afin de rendre la nappe 45 de pâte à mâcher 5 plus homogène et plus dense.

La tête de filière d'extrusion 48 s'étend à l'intérieur du canal 29 de la tête de compression 16, selon l'axe de symétrie longitudinal de celui-ci. Le canal 29 de la tête de compression 16 étant parcouru par un flux 57 de sucre cuit 4 délivré en sortie 19 de l'extrudeur 11, l'extrémité arrière du conduit central 54 de la tête de filière d'extrusion 48 est conformée en cône 58 et les rebords arrière tels que 59 des cavités de raccordement 53 affectent une section droite transversale 60 sensiblement triangulaire afin de faciliter l'écoulement du flux 57 de sucre cuit 4 le long du corps de la tête de filière d'extrusion 48. Par ailleurs, la tête de compression 16 est généralement inclinée vers le bas afin de faciliter l'avance de la nappe 45 de pâte à mâcher 5 et du flux de sucre cuit 4 représentés respectivement en traits obliques et en traits mixtes sur la figure 5.

Le canal 29 de la tête de compression 16 qui détermine le diamètre extérieur D₂ de la gaine périphérique 23 de sucre cuit 4 présente une sortie tronconique 61 dans le sens de l'écoulement du sucre cuit 4 au niveau de la sortie composite 7 du groupe de co-extrusion 6. La réduction de diamètre correspondante qui débute avant le plan frontal de la sortie composite 7 du groupe de co-extrusion 6 détermine les diamètre et profil extérieurs terminaux de la gaine périphérique 23 de sucre cuit 4 à la sortie du groupe de co-extrusion 6 et force celui-ci à converger vers le noyau cylindrique 22 de pâte à mâcher 5, de façon à favoriser la solidarisation par fusion entre le noyau 22 de pâte à mâcher 5 et la gaine périphérique 23 de sucre cuit 4.

## Revendications

1. Groupe de co-extrusion (6) d'un boudin composite (21) à noyau (22) de pâte à mâcher (5) et à enveloppe périphérique (23) de sucre cuit (4) comportant deux voies d'alimentation (2,3) pour le sucre cuit (4) et la pâte à mâcher (5) qui convergent en V vers le groupe de co-extrusion (6) dont la sortie composite (7) unique alimente un dispositif aval (8) de conformation et de conditionnement ultérieurs du boudin (21) en dragées, pastilles, tablettes ou autres, caractérisé en ce qu'il comprend une tête de compression-extrusion (16) présentant un canal d'extrusion (29) à l'intérieur duquel s'étend une tête de filière (48) et en ce qu'une chambre (51) à deux voies symétriques d'un distributeur (49) se prolonge par des cavités latérales de raccordement (53) à un conduit d'extrusion (54) de la tête de filière (48).

2. Groupe de co-extrusion (6) selon la revendication 1, caractérisé en ce que les voies d'alimentation (2,3) en sucre cuit (4) et en pâte à mâcher (5) se raccordent au groupe de co-extrusion (6) selon deux niveaux différents.

3. Groupe de co-extrusion (6) selon la revendication 2, caractérisé en ce que la voie d'alimentation (3) en pâte à mâcher (5) est surélevée par rapport à la voie d'alimentation (2) en sucre cuit (4).

4. Groupe de co-extrusion (6) selon l'une des revendications 1, 2 ou 3, caractérisé en ce que le canal d'extrusion (29) de la tête de compression-extrusion (16) s'étend dans le prolongement de la voie d'alimentation (2).

5. Groupe de co-extrusion (6) selon la revendication 4, caractérisé en ce que la voie d'alimentation (3) en pâte à mâcher (5) se raccorde à une ouverture (52) du distributeur (49) par un bloc de renvoi (31) de la pâte à mâcher (5) vers le bas.

6. Groupe de co-extrusion (6) selon l'une des revendications 4 ou 5, caractérisé en ce que la tête de filière d'extrusion (48) s'étend le long de l'axe de symétrie longitudinal du canal d'extrusion (29).

7. Groupe de co-extrusion (6) selon l'une quelconque des revendications précédentes, caractérisé en ce que le canal d'extrusion (29) de la tête de compression-extrusion (16) et le conduit d'extrusion (54) de la tête de filière (48) débouchent dans un même plan frontal.

8. Groupe de co-extrusion (6) selon la revendication 7, caractérisé en ce que le canal (29) présente une sortie tronconique (61) dont la réduction de diamètre correspondante force l'enveloppe périphérique (23) de sucre cuit (4) à converger vers le noyau (22) de pâte à mâcher (5).

9. Groupe de co-extrusion (6) selon l'une des revendications 1 ou 2, caractérisé en ce que la tête de compression-extrusion (16) est inclinée vers le bas dans le sens de l'avance des produits (4,5).

10. Groupe de co-extrusion (6) selon l'une quelconque des revendications précédentes, caractérisé en ce que le distributeur (49) se raccorde aux cavités latérales (53) selon des rebords arrondis (56).

## Claims

1. Device (6) for co-extruding a composite sausage shape (21) with a centre (22) made of chewing gum (5) and a peripheral shell (23) made of cooked sugar (4) including two feed channels (2, 3) for the cooked sugar (4) and for the chewing gum (5) which converge in a V-shape towards the co-extrusion device (6), the single composite outlet (7) of which feeds a downstream device (8) for the subsequent shaping and packaging of the sausage shape (21) into sugar-coated sweets, pastilles, tablets or the like, characterized in that it comprises a compression-extrusion head (16) which has an extrusion duct (29) into which there extends a die head (48) and in that a chamber (51) with two symmetric channels of a distributor (49) is extended by lateral cavities (53) for connecting to an extrusion passage (54) of the die head (48).

2. Co-extrusion device (6) according to Claim 1, characterized in that the feed channels (2, 3) for cooked sugar (4) and chewing gum (5) connect to the co-extrusion device (6) at two different places.

3. Co-extrusion device (6) according to Claim 2, characterized in that the feed channel (3) for chewing gum (5) is raised up higher than the feed channel (2) for cooked sugar (4).

4. Co-extrusion device (6) according to one of Claims 1, 2 and 3, characterized in that the extrusion duct (29) of the compression-extrusion head (16) runs in the continuation of the feed channel (2).

5. Co-extrusion device (6) according to Claim 4, characterized in that the feed channel (3) for chewing gum (5) connects to an opening (52) of the distributor (49) via a unit (31) which deflects the chewing gum (5) downwards.

6. Co-extrusion device (6) according to either of Claims 4 or 5, characterized in that the head of the extrusion die (48) runs along the longitudinal axis of symmetry of the extrusion duct (29).

7. Co-extrusion device (6) according to any one of the preceding claims, characterized in that the extrusion duct (29) of the compression-extrusion head (16) and the extrusion passage (54) of the die head (48) open in one and the same frontal plane.

8. Co-extrusion device (6) according to Claim 7, characterized in that the duct (29) has a frustoconical outlet (61), the corresponding reduction in diameter of which forces the peripheral shell (23) of cooked sugar (4) to converge towards the centre (22) made of chewing gum (5).

9. Co-extrusion device (6) according to either of Claims 1 and 2, characterized in that the compression-extrusion head (16) is inclined downwards in the direction of advance of the products (4, 5).

10. Co-extrusion device (6) according to any one of the preceding claims, characterized in that the distributor (49) is connected to the lateral cavities (53) via rounded rims (56).

## Patentansprüche

1. Ein Coextrusionsgerät (6) für einen Kompositstrang (21) für einen Strang (22) aus Kaugummi (5) und einer Außenbeschichtung (23) aus Zucker (4), bestehend aus zwei Versorgungszufuhren (2,3) für den Zucker (4) und das Kaugummi (5), die am Coextrusionsgerät (6), dessen Kompositausgang (7) eine rückwärtige Vorrichtung (8) zur Formgebung und abschließenden Behandlung des Strangs als Dragées, Pastillen oder Tabletten usw. versorgt, v-förmig konvergieren, wobei das Coextrusionsgerät aus folgenden Elementen besteht: Komprimiervorrichtung (16) mit einem Kanal zum Strangpressen (29), in dessen Innerem sich ein Spritzmundstück (48) befindet und sich eine Kammer (51) mit zwei symmetrischen Zufuhren eines Verteilers (49) sich über die seitlichen Verbindungsräume (53) zu einer Strangpressleitung (54) des Spritzmundstücks erstreckt.

2. Ein Coextrusionsgerät (6) nach Anspruch 1, dadurch gekennzeichnet, daß die Versorgungszufuhren (2,3) aus Zucker (4) und aus Kaugummi (5) sich im Coextrusionsgerät (6) auf zwei verschiedenen Ebenen verbinden.

3. Ein Coextrusionsgerät (6) nach Anspruch 2, dadurch gekennzeichnet, daß die Versorgungszufuhr (3) aus Kaugummi (5) gegenüber der Versorgungszufuhr (2) aus Zucker (4) höher liegt.

4. Ein Coextrusionsgerät (6) nach einem der Ansprüche 1,2 oder 3, dadurch gekennzeichnet, daß der Strangpresskanal (29) der Komprimiervorrichtung (16) sich über die Verlängerung der Versorgungszufuhr (2) erstreckt.

5. Ein Coextrusionsgerät (6) nach Anspruch 4, dadurch gekennzeichnet, daß die Versorgungszufuhr (3) mit Kaugummi (5) sich mit einer Öffnung (52) des Verteilers (49) durch einen Rückflußblock (31) für den Kaugummi nach unten verbindet.

6. Ein Coextrusionsgerät (6) nach einem der Ansprüche 4 oder 5, dadurch gekennzeichnet, daß das Spritzmundstück (48) sich entlang der längs gelegenen Symmetrieachse des Strangpresskanals (29) erstreckt.

7. Ein Coextrusionsgerät (6) nach einem der vorangegangenen Ansprüche, dadurch gekennzeichnet, daß der Strangpresskanal (29) der Komprimiervorrichtung (16) und die Strangpressleitung (54) des Spritzmundstücks (48) auf der gleichen Ebene nach vorn austreten.

8. Ein Coextrusionsgerät (6) nach Anspruch 7, dadurch gekennzeichnet, daß der Kanal (29) einen kegelstumpfartigen Ausgang (61) aufweist, dessen entsprechende Verringerung im Durchmesser die Außenschicht (23) aus Zucker (4) dazu bewegt, zum Strang (22) aus Kaugummi (5) hin zu konvergieren.

9. Ein Coextrusionsgerät (6) nach einem der Ansprüche 1 oder 2, dadurch gekennzeichnet, daß die Komprimiervorrichtung (16) nach unten und in Fließrichtung des Produkts (4,5) gekrümmt ist.

10. Ein Coextrusionsgerät (6) nach einem beliebigen der vorangegangenen Ansprüche, dadurch gekennzeichnet, daß der Verteiler (49) sich mit den seitlichen Räumen (53) an den abgerundeten Rändern (56) verbindet.
